# EUROPEAN PATENT SPECIFICATION

(11) **EP 1 485 611 B1**
(45) Date of publication and mention of the grant of the patent: **19.05.2010**
(21) Application number: 03711858.5
(22) Date of filing: 19.03.2003
(51) Int. Cl.: F03D 1/06, F03D 3/06

(54) **WIND TURBINE BLADE WITH CARBON FIBRE TIP**
WINDTURBINENSCHAUFEL MIT KOHLEFASERSPITZE
PALE D'EOLIENNE A BOUT EN FIBRES DE CARBONE

(30) Priority: 19.03.2002 DK 200200424
(43) Date of publication of application: 15.12.2004
(73) Proprietor: LM GLASFIBER A/S, 6640 Lunderskov (DK)
(72) Inventor: GRABAU, Peter, DK-6000 Kolding (DK); ANDERSEN, Lars, Fuglsang, DK-5260 Odense S (DK)
(74) Representative: Dylmer, Henrik
(86) International application number: PCT/DK2003/000185
(87) International publication number: WO 2003/078833

(56) References cited:
- WO-A-00/14405
- DE-U- 20 206 942
- GB-A- 2 012 698
- GB-A- 2 164 309
- US-A- 6 056 838

## Description

### Technical Field

The invention relates to a wind turbine blade according to the preamble of claim 1.

Wind turbine blades are typically made by means of two blade shell halves of fibre-reinforced polymer. When moulded the two halves are glued together along the edges and via two bracings, which prior thereto have been glued to the inner face of one the blade shell halves. The other blade shell half is then arranged on top of bracings and glued thereto and along the edges.

The blade shell halves per se are typically made by vacuum infusion, in which evenly distributed fibres, rovings, which are fibre bundles, bands of rovings or mats which may be felt mats of single-fibres or woven mats of fibre rovings, are layered in a mould part and cover by a vacuum bag. By creating vacuum (typically 80-90%) in the cavity between the inner face of the mould part and the vacuum bag resin is sucked into and fills the cavity containing the fibre material. In order to obtain the optimum distribution of resin, so-called distribution layers and distribution channels are often used between the vacuum bag and the fibre material.

The used polymer is typically polyester or epoxy, and the fibre reinforcement is usually based on fibre glass. It is, however, also known to use carbon fibres which are stiffer than glass fibres, but have a smaller elongation at breakage than glass fibres. The carbon fibres may be added to obtain a higher degree of stiffness and/or a lower weight. It is thus possible to let a portion of the fibre reinforcement be formed of carbon fibres to reduce the weight of the blade without the blade loosing too much of its stiffness. Carbon fibres are, however, encumbered by the drawback of being significantly more expensive than glass fibres, which is one of the reasons why wind turbine blades of carbon fibre-reinforced polymer are not widely used.

### Background Art

From WO 00/14405 it is known to reinforce a wind turbine blade of fibre glass polymer with longitudinal bands of carbon fibre-reinforced polymer.

US 6,287,122 discloses the manufacture of elongated composite products, wherein a variation in the stiffness of the product along its length is obtained by altering the fibre content or the angle orientation of braided fibres.

US 5,520,532 discloses a mould part of fibre-reinforced polymer of a varying stiffness, said stiffness being obtained by varying the number of fibre mat layers.

US 4,077,740 discloses a helicopter rotor blade of a fibre composite material, the stiffness of the blade varying when seen in longitudinal direction. This feature is obtained by varying the fibre orientation so as to obtain an enhanced vibration dampening.

The dead load of modem fibreglass blades constitutes a problem in that a high dead load moment requires a high fatigue resistance in the edgewise direction of the blade. This problem increases with the length of the blades.

### Brief Description of the Invention

The object of the invention is to solve the above problem in a simple and inexpensive manner.

According to the invention the object is obtained in that the blade is divided into an inner end portion including the blade root and made substantially from fibre glass-reinforced polymer and an outer end portion including the blade tip and made substantially from carbon fibre-reinforced polymer. The weight is thus reduced in the outermost part, whereby the dead load moment is minimised. Less material and/or a smaller cross section is thus required at the innermost portion of the blade and the load on the turbine hub is reduced. The outermost portion of the blade may furthermore be provided with an increased stiffness, whereby the risk of the blade deflecting so heavily that the blade tip hits the turbine tower is reduced. Such a wind turbine blade is more inexpensive to produce than a blade made solely of carbon-fibre-reinforced polymer.

At a certain degree of stiffness, the dead load may be reduced by using carbon fibres in the outer end portion, whereby the dynamic loads on the blade shell and the blade root may also be reduced, said parts being particularly sensitive to dynamic loads.

By changing the carbon fibre content in the outer end portion or the length thereof, the stiffness as well as the natural frequencies may be varied. The stiffness and the natural frequencies may thus be optimised to the specific conditions.

A comparatively stiff outer end portion and a comparatively less stiff inner end portion result in an advantageous deflection shape as regards aerodynamic damping, the damping depending on the integrated deflection along the blade during a vibration. An increased aerodynamic damping is advantageous in that the aerodynamic load thus is reduced.

Compared to a blade made solely of fibre glass-reinforced polymer or a blade made solely of carbon-fibre-reinforced polymer, a blade according to the invention renders an optimum stiffness to costs ratio.

According to an embodiment the outer end portion may constitute between 25% and 50% of the entire length of the blade.

The outer end portion may, however, constitute 5%, 10%, 15%, 20%, 25%, 30%, 35%, 40%, 45%, 50%, 55%, 60%, 65%, 70%, 75%, 80%, 85% or even 90% of the blade's length.

According to a preferred embodiment the outer end portion opposite the blade tip may include a transition zone in which the carbon fibres are gradually replaced by glass fibres. As a result an abrupt change in the blade stiffness in the transitional area between the carbon fibres and the glass fibres is avoided. At heavy dynamic or static stresses, an abrupt transition between the carbon fibres and the glass fibres causes a concentration of stress, the carbon fibres typically being 3-4 times stiffer than the glass fibres. This may involve a risk of destroying the blade. By using such a transition zone a heavy stress concentration is avoided at the boundary surface between the carbon fibres and the glass fibres.

According to an embodiment the length of the transition zone may be between 0.5 and 1 metre. A length of up to 10 metres or of even more than 10 metres may, however, also be preferred.

According to the invention the two types of fibres may be distributed such in the polymer matrix that carbon fibres or carbon fibre bundles of varying lengths extend from a first end of the transition zone, and glass fibres or glass fibre bundles extend from the opposite end of the transition zone, whereby a particularly smooth transition in stiffness is obtained.

According to another embodiment the transition zone may be formed of a laminate of several fibre layers, in which each fibre layer has a boundary surface at a position in the longitudinal direction, the fibre layer including carbon fibres on one side of the boundary surface and glass fibres on the other side of the boundary face, the boundary surfaces of each fibre layer being displaced in relation to each other in the longitudinal direction of the blade. As a result a gradual change in stiffness in the transition zone is obtained in a particularly simple manner.

According to an embodiment the boundary surfaces may be serrated in a sectional view parallel to the fibre layers. An even smoother transition in the stiffness is thus obtained in the transition zone. The tips of the serrated boundary surfaces may be displaced in relation to each other in the transverse direction of the blade. As a result an additional smooth variation in the stiffness is obtained in the transition zone.

### Brief Description of the Drawings

The invention is explained in greater detail below by means of various embodiments of the invention in diagrammatical views in the drawings, in which
Fig. 1 shows a wind turbine with three blades,
Fig. 2 shows a blade according to an embodiment of the invention,
Fig. 3 shows a continuous variation of the quantitative ratio of carbon fibre to glass fibres according to a particular embodiment of the invention,
Fig. 4 shows a continuous variation of the quantitative ratio of carbon fibre to glass fibres according to another particular embodiment of the invention,
Fig. 5 shows a continuous variation of the quantitative ratio of carbon fibre to glass fibres according to a third particular embodiment of the invention,
Fig. 6 shows diagrams illustrating how the quantitative ratio of carbon fibres to glass fibres may be varied in the transition zone.

### Best Modes for Carrying Out the Invention

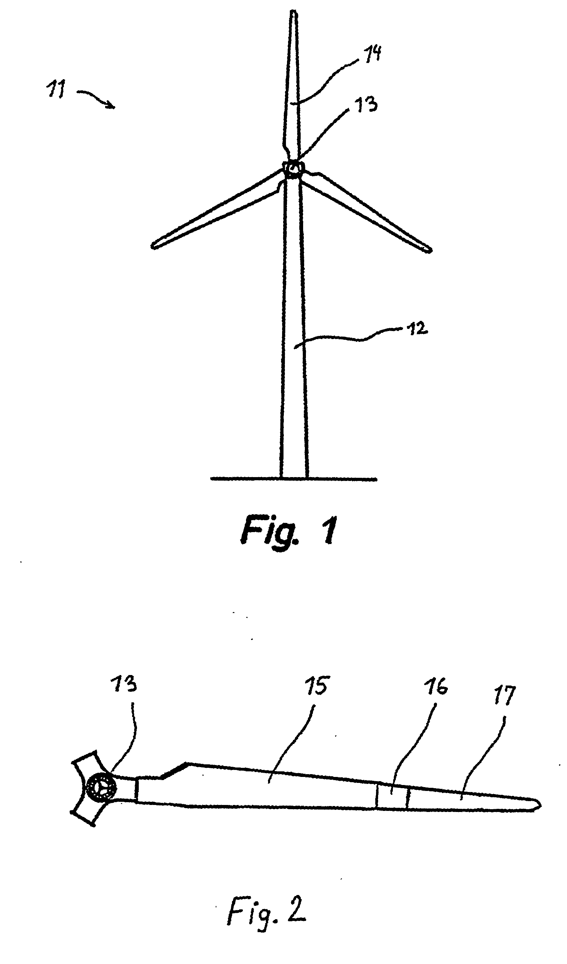

Fig. 1 shows a modem wind turbine including a tower 12 with a hub 13 and three wind turbine blades 14 extending from the hub.

Fig. 2 illustrates an embodiment of a wind turbine blade according to the invention, in which an inner end portion 15 including the blade root is made substantially from fibre glass-reinforced polymer, and in which an outer end portion 17 including the blade tip is made substantially from carbon fibre-reinforced polymer. Bordering on the inner end portion 15 the outer end portion 17 includes a transition zone 16, in which the carbon fibres are gradually replaced by glass fibres such that a gradual change in the stiffness of the blade is obtained.

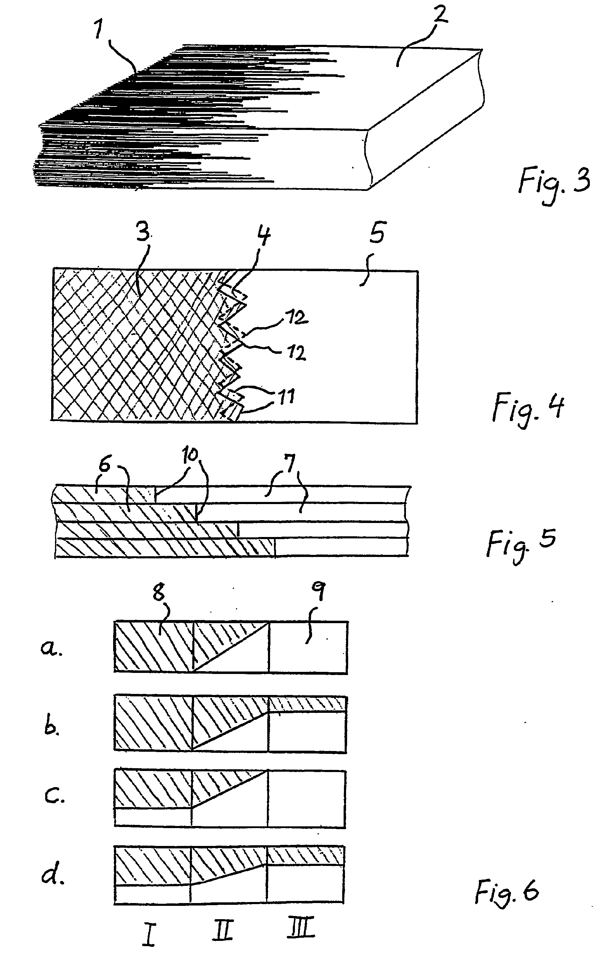

Fig. 3 is a sectional view of the transition zone, in which the quantitative ratio of carbon fibres to glass fibres gradually changes. The carbon fibres 1 extend from the left-hand side of the sectional view in form of bundles or single-fibres of different lengths. The glass fibres 2 are not visible in Fig. 3, but they complement the carbon fibres 1. The transition between the two types of fibres are thus diffuse such that a smooth transition is obtained from the outer end portion 17, which is substantially reinforced with carbon fibres 1, to the inner end portion 15, which is substantially reinforced with glass fibres 2.

Fig. 4 illustrates a second embodiment in which fibre mats of non-woven fibres or knitted fibre bundles have been punched, whereby they are provided with serrations in one of their ends. Two mats of carbon fibres and glass fibres, respectively, in the same fibre layer have correspondingly shaped serrations and thus mesh with each other. Two stacked fibre layer serrations may be displaced in relation to each other, as shown in Fig. 4, whereby a smooth transition is obtained between the stiffness in the area with carbon fibres shown on the left-hand side and the stiffness in the area with glass fibres shown on the right-hand side. Fig. 4 is a diagrammatic view of two stacked carbon fibre layers 3, 4 and corresponding glass fibre layers are provided in the area 5. As also shown in Fig. 4 the tips 12 of the serrations 11 of the two carbon fibre layers 3, 4 are displaced in transverse direction to ensure a smooth stiffness transition. A transition zone between the area with carbon fibres and the areas with glass fibres is thus determined by the length of the serrations. Accordingly the transition zone may vary according to need by either shortening or extending the length of the serrations.

Fig. 5 shows a particularly simple provision of the transition zone between the outer end portion and the inner end portion. Fig. 5 is a diagrammatic view of four stacked fibre layers including a carbon fibre layer 6 and a glass fibre layer 7. Each fibre layer has a boundary surface 10, where the carbon fibres are replaced by glass fibres, a transition zone of some length being obtained, since the boundary faces 10 are displaced in relation to each other. The length of the transition zone may of course be varied according to need by displacing the boundary faces more or less in relation to each other and/or by using more fibre layers.

Fig. 6 is a diagrammatic view of the quantitative ratio of the carbon fibres to the glass fibres in the longitudinal direction of the blade. The first zone I corresponds to the outer end portion 17 and the second zone III corresponds to the inner end portion 15 of the blade. A transition zone II is provided between the two zones, the ratio of glass fibres 9 in said zone steadily increasing from the level in the first zone I to the level in the second zone III.

Fig. 6a thus shows an embodiment, in which the first zone I is formed solely of carbon fibres 8 and the second zone III is formed solely of glass fibres 9.

Fig. 6b shows an embodiment, in which the first zone I is formed solely of carbon fibres 8 and the second zone III includes a constant minority amount of carbon fibres 8 and a constant majority amount of glass fibres 9.

Fig. 6c shows an embodiment, in which the first zone I includes a constant majority amount of carbon fibres 8 and a constant minority amount of glass fibres 9, and in which the second zone III is formed solely of glass fibres 9.

Fig. 6d shown an embodiment, in which the first zone I includes a constant majority amount of carbon fibres 8 and a constant minority amount of glass fibres 9, and in which the second zone III includes a small constant amount of carbon fibres and a large constant amount of glass fibres 9.

Fig. 6a thus diagrammatically illustrates a preferred embodiment of a wind turbine blade, wherein the first zone I corresponds to the outer end portion of the blade including the blade tip and wherein the second zone III corresponds to the inner end portion of the blade including the blade root. The reinforcement material for the outer end portion is thus made solely of carbon fibres, while the inner end portion of the blade root is made solely of glass fibres. Consequently the outer end portion may include a transition zone II, in which the carbon fibres and the glass fibres gradually substitute each other. This transition zone II may have a restricted length of for instance 0.5-1 metre. The blade may, however, also be provided with the embodiments shown in Figs. 6b-6d.

A transition zone may be provided in the blade during the fibre lay-up per se in the mould parts. It is, however, also possible to use prefabricated transitional laminates produced according to the principles shown in Figs. 3, 4 and 5. Such prefabricated transitional laminates are advantageous in relation to production in that the fibre lay-up process time is substantially the same as at the production of conventional wind turbine blades, in which the same material is used in the entire longitudinal direction of the blade.

If an existing wind turbine is to be provided with longer blades, this may be obtained by replacing the outermost portion of the blade by a transition zone including one or more transitional laminates and a carbon fibre tip. The weight of the blade is not or only slightly increased compared to the original blades made completely from fibreglass-reinforced polymer. Optionally completely new blades may be made for an existing wind turbine or the outermost portion blades may be cut off and replaced by a carbon fibre tip with or without a transition zone.

The advantages according to the invention are particularly obtained by making the load-bearing portions of the outer end portion substantially from carbon fibre-reinforced polymer. The load-bearing portions include the main laminates in form of longitudinal fibre-reinforced polymer bands provided in the areas of the suction and pressure sides of the blade shell being furthest from the centre of the blade cross section. The laminates reinforcing the blade in edgewise direction at the leading and trailing edges of the blade may also advantageously be made of carbon fibre-reinforced polymer in the outer end portion of the blade.

The main laminates may advantageously be provided as hybrid mats in which evenly distributed rovings or bundles of either glass fibres or carbon fibres are distributed over the cross-sectional area.

For lightning reasons it may be advantageous to make the outermost portion of the blade tip entirely out of fibre glass so as to ensure that strokes of lightning hit a purpose-built lightning receptor and not the electrically conducting carbon fibre material.

Tests have shown that the outermost portions of the carbon fibres in the transition zone may break at deflection of the transition zone, but this is not an entirely undesirable effect, as it contributes to a further smoothing of the stiffness transition. The frequency of broken fibres may thus be high but not critical, as they are surrounded by more compliant glass fibres. However, the broken fibres still contribute to reducing the deflection and thus the breakage of additional fibres. The gradual and even transition between the properties of the composite material, which is based on glass fibres and carbon fibres, is thus obtained by means of two factors. The first factor is the distribution of stiff and compliant fibres to obtain a smooth transition from the stiff to the compliant area. The second factor is the non-critical breakage, which further smoothens the transition. An additional not shown embodiment of a wind turbine blade according to the invention may be obtained by means of a so-called spray-up process. In this process a spray gun is used for the polymer material and a mixture of chopped fibres of the two types are ejected into a resin stream and sprayed into the mould. By varying the mix ratio during the spray-up process, the intended transition zone may be obtained.

The elongation at breakage for glass fibres is typically about 4.8%, while it typically ranges between 0.3% and 1.4% for carbon fibres. Young's Modulus of glass fibres is about 73,000 MPa, while Young's Modulus of carbon fibres (means modulus) typically is about 245,000 MPa. Carbon fibres are typically 3-4 times stiffer than glass fibres. The density of glass is about 2.54 g/cm³, while the density of carbon is about 1.75 g/cm³_{.}

## Claims

1. Wind turbine blade (14) of fibre-reinforced polymer **characterised in that** it is divided into an inner end portion (15) including the blade root and made substantially from fibre glass-reinforced polymer, and an outer end portion (17) including the blade tip and made substantially from carbon fibre-reinforced polymer.

2. Wind turbine blade (14) according to claim 1, **characterised in that** the outer end portion (17) constitutes between 25 and 50% of the entire length of the blade (14).

3. Wind turbine blade (14) according to claim 1 or 2, **characterised in that** the outer end portion (17) opposite the blade tip includes a transition zone (16) in which the carbon fibres are gradually replaced by glass fibres.

4. Wind turbine blade (14) according to claim 3, wherein the length of the transition zone (16) is between 0.5 and 1 metre.

5. Wind turbine blade (14) according to claim 3 or 4, **characterised in that** the two types of fibres are distributed such in the polymer matrix that carbon fibres or carbon fibre bundles (1) with varying lengths extend from a first end of the transition zone (II) and glass fibres or glass fibre bundles (2) extend from the opposite end of the transition zone (II).

6. Wind turbine blade (14) according to claim 3 or 4, **characterised in that** the transition zone (II) is formed of a laminate of several fibre layers (6,7), in which each fibre layer has a boundary surface (10) at a position in the longitudinal direction, the fibre layer including carbon fibres (6) on one side of the boundary surface and glass fibres (7) on the other side of the boundary face, the boundary surfaces (10) of each fibre layer being displaced in relation to each other in the longitudinal direction of the blade (14).

7. Wind turbine blade according to claim 6, wherein the boundary surfaces (11) are serrated in a sectional view parallel to the fibre layers (3, 4, 5).

8. Wind turbine blade according to claim 7, wherein the tips (12) of the serrated boundary surfaces (11) are displaced in relation to each other in the transverse direction of the blade (14).

## Patentansprüche

1. Windturbinenschaufel (14) aus faserverstärktem Polymer,
**dadurch gekennzeichnet,**
**daß** sie unterteilt ist in einen inneren Endbereich (15), der die Schaufelwurzel aufweist und im wesentlichen aus glasfaserverstärktem Polymer besteht, und einen äußeren Endbereich (17), der die Schaufelspitze aufweist und im wesentlichen aus kohlenstofffaserverstärktem Polymer besteht.

2. Windturbinenschaufel (14) nach Anspruch 1,
**dadurch gekennzeichnet,**
**daß** der äußere Endbereich (17) zwischen 25 % und 50 % der gesamten Länge der Schaufel ausmacht.

3. Windturbinenschaufel (14) nach Anspruch 1 oder 2,
**dadurch gekennzeichnet,**
**daß** der äußere Endbereich (17) gegenüber der Schaufelspitze eine Übergangszone (16) aufweist, in der die Kohlenstofffasern allmählich durch Glasfasern ersetzt sind.

4. Windturbinenschaufel (14) nach Anspruch 3,
wobei die Länge der Übergangszone (16) zwischen 0,5 Meter und 1 Meter liegt.

5. Windturbinenschaufel (14) nach Anspruch 3 oder 4,
**dadurch gekennzeichnet,**
**daß** die beiden Fasertypen derart in der Polymermatrix verteilt sind, daß Kohlenstofffasern oder Kohlenstofffaserbündel (1) mit variierender Länge sich von einem ersten Ende der Übergangszone (II) aus erstrecken und Glasfasern oder Glasfaserbündel (2) sich von dem gegenüberliegenden Ende der Übergangszone (II) aus erstrecken.

6. Windturbinenschaufel (14) nach Anspruch 3 oder 4,
**dadurch gekennzeichnet,**
**daß** die Übergangszone (II) aus einem Laminat aus mehreren Faserschichten (6, 7) gebildet ist, in denen jede Faserschicht eine Grenzfläche (10) in einer Position in der Längsrichtung besitzt, wobei die Faserschicht, die Kohlenstofffasern (6) enthält, sich auf der einen Seite der Grenzfläche befindet und die Glasfasern (7) sich auf der anderen Seite der Grenzfläche befinden, wobei die Grenzflächen (10) von jeder Faserschicht in Relation zueinander in der Längsrichtung der Schaufel (14) versetzt sind.

7. Windturbinenschaufel nach Anspruch 6,
wobei die Grenzflächen (11) in einer Schnittansicht parallel zu den Faserschichten (3, 4, 5) gezahnt ausgebildet sind.

8. Windturbinenschaufel nach Anspruch 7,
wobei die Spitzen (12) der gezahnten Grenzflächen (11) in Relation zueinander in der Querrichtung der Schaufel (14) versetzt sind.

## Revendications

1. Pale de turbine éolienne (14) en polymère renforcé par des fibres, **caractérisée en ce qu'**elle est divisée en une portion terminale intérieure (15) qui inclut la racine de la pale et qui est réalisée sensiblement en polymère renforcé par des fibres de verre, et en une portion terminale extérieure (17) qui inclut le bout de la pale et qui est réalisée sensiblement en polymère renforcé par des fibres de carbone.

2. Pale de turbine éolienne (14) selon la revendication 1, **caractérisée en ce que** la portion terminale extérieure (17) constitue entre 25 et 50 % de la longueur entière de la pale (14).

3. Pale de turbine éolienne (14) selon la revendication 1 ou 2, **caractérisée en ce que** la portion terminale extérieure (17) à l'opposé du bout de la pale inclut une zone de transition (16) dans laquelle les fibres de carbone sont graduellement remplacées par des fibres de verre.

4. Pale de turbine éolienne (14) selon la revendication 3, dans laquelle la longueur de la zone de transition (16) est entre 0,5 et 1 m.

5. Pale de turbine éolienne (14) selon la revendication 3 ou 4, **caractérisée en ce que** les deux types de fibres sont distribués dans la matrice en polymère de telle façon que des fibres de carbone ou des faisceaux de fibres de carbone (1) avec des longueurs variables s'étendent depuis une première extrémité de la zone de transition (II), et que des fibres de verre ou des faisceaux de fibres de verre (2) s'étendent depuis l'extrémité opposée de la zone de transition (II).

6. Pale de turbine éolienne (14) selon la revendication 3 ou 4, **caractérisé en ce que** la zone de transition (II) est formée d'un stratifié de plusieurs couches de fibres (6, 7), dans lequel chaque couche de fibres possède une surface frontière (10) à une position dans la direction longitudinale, la couche de fibres incluant des fibres de carbone (6) sur un côté de la surface frontière et des fibres de verre (7) sur l'autre côté de la surface frontière, les surfaces frontière (10) de chaque fibre étant déplacées les unes par rapport aux autres dans la direction longitudinale de la pale (14).

7. Pale de turbine éolienne selon la revendication 6, dans laquelle les surfaces frontière (11) sont cannelées dans une vue en coupe parallèle aux couches de fibres (3, 4, 5).

8. Pale de turbine éolienne selon la revendication 7, dans laquelle les bouts (12) des surfaces frontière cannelées (11) sont déplacés les uns par rapport aux autres dans la direction transversale de la pale (14).
